# EUROPEAN PATENT APPLICATION

(11) **EP 2 234 453 A1**
(43) Date of publication of application: **29.09.2010**
(21) Application number: 08871118.9
(22) Date of filing: 11.12.2008
(51) Int. Cl.: H04W 84/12

(54) **WIRELESS COMMUNICATION TERMINAL AND WIRELESS COMMUNICATION METHOD**

(30) Priority: 18.01.2008 JP 2008009171
(71) Applicant: Panasonic Corporation, Kadoma-shi Osaka 571-8501 (JP)
(72) Inventor: KAWAMURA, Akira, Osaka 540-6207 (JP)
(74) Representative: Grünecker, Kinkeldey, Stockmair & Schwanhäusser Anwaltssozietät
(86) International application number: PCT/JP2008/003714
(87) International publication number: WO 2009/090709

(57) **Abstract**

It is an object of the invention to provide a wireless communication terminal and wireless communication method in which, even when moved outside the wireless area during communication, communication between terminals can be continued without requiring an operation of previously registering identification information or key information. A wireless communication terminal (101) has: a terminal identifier storage (12) for storing a terminal identifier of an external terminal (110); a link disconnection detecting unit (13) which detects disconnection of a communication link; a network searching unit (15) which searches a wireless network; and a wireless control unit (14) which, in the case where a network identifier of a found network coincides with the stored identifier of the external terminal (110), connects the wireless communication terminal to the wireless network. According to the configuration, without requiring an operation by the user, a connection between terminals can be automatically established, and the communication can be continued.

## Description

### Technical Field

The present invention relates to a wireless communication terminal and a wireless communication method performed between a plurality of wireless communication terminals, and particularly to a wireless communication terminal and wireless communication method in which, even when moved outside the range of a wireless network, communication between wireless communication terminals can be continued.

### Background Art

Recently, a portable terminal having a wireless communication function is in widespread use. For example, personal computers, portable telephones, PDAs (Personal Data Assistants), portable game machines, or the like are connected to one another via a communication system such as a wireless LAN (Local Area Network) or Bluetooth (registered trademark), and various data communications can be performed.

In the Bluetooth communication system, corresponding terminals perform a procedure called pairing, whereby a connection between the terminals is established. In order to perform the pairing, the security code called a pass key must be previously known, and, in the pairing, the user of the terminals must input the pass key into one of the terminals. The Bluetooth communication system is one kind of the ad-hoc communication.

In the wireless LAN communication system, there are an infrastructure mode (base-station communication) where a communication link with a wireless LAN base station apparatus called an access point is established to communicate with a communication party wireless LAN terminal which belongs to the same access point, and an ad-hoc mode (terminal-to-terminal communication) where a communication link is established directly with a communication party wireless LAN terminal to perform communication.

In a wireless LAN terminal, in order to continue communication with a communication party wireless LAN terminal while switching the communication modes, the user of the wireless LAN terminal must perform a procedure or setting for a reconnection. In a wireless LAN terminal disclosed in Patent Reference 1, for example, beacon receiving means receives a beacon from an access point, timing detecting means detects the timing of reception of the beacon, and, when the beacon reception interval is longer than a predetermined time period, mode switching means switches over the communication modes. In the case where the beacon signal does not reach from the communication party, therefore, the terminal can be automatically switched to another communication mode.

In the case where a beacon signal containing identification information of an access point which is previously registered is received, the wireless LAN terminal is switched to the infrastructure mode, and hence has advantages that, after the communication mode switching, a connection can be surely made to the access point, and that an unnecessary switching operation can be prevented from being performed.

Patent Reference 1: JP-A-2005-333378

### Disclosure of the Invention

### Problems that the Invention is to Solve

In the above-described conventional wireless LAN terminal, in order to, after switching to the ad-hoc mode, connect the terminal to a desired wireless LAN terminal, however, it is necessary to previously register identification information, and key information for authentication and encryption. Therefore, the terminal is inconvenient. In the case where a connection is to be made in the ad-hoc mode to a wireless LAN terminal information of which cannot be previously known, particularly, the registering operation must be conducted in each connection. Therefore, convenience for the user is lowered.

Also in the case where identification information is not previously registered, a wireless LAN terminal information in which authentication and encryption are not set can be connected. In this case, however, communication cannot be encrypted, and a connection party terminal cannot be authenticated, with the result that safe communication cannot be performed.

The invention has been conducted in view of the circumstances. It is an object of the invention to provide a wireless communication terminal and wireless communication method in which, without requiring an operation of previously registering identification information or key information, communication in the ad-hoc mode can be safely performed.

### Means for Solving the Problems

A wireless communication terminal according to the present invention is a wireless communication terminal which performs base-station communication where the terminal communicates with a wireless base station, and terminal-to-terminal communication where the terminal communicates directly with another wireless communication terminal, the wireless communication terminal comprising: a terminal identifier storage for storing a terminal identifier of an external communication terminal connected through the base-station communication; a base-station communication disconnection detecting unit which is adapted to detect disconnection of the base-station communication; a network searching unit which is adapted to search another wireless communication terminal that performs the terminal-to-terminal communication; an identifier collating unit which is adapted to collate a wireless identifier of the other wireless communication terminal which is found by the network searching unit, with the stored terminal identifier of the external communication terminal; and a wireless control unit which is, in a case where a result of the collation by the identifier collating unit coincides, adapted to connect the wireless communication terminal to the other wireless communication terminal which is found by the network searching unit.

According to the configuration, during communication through the base-station communication network, the identifier of the connection party terminal is previously stored, and when the communication link is disconnected, a neighbor wireless network is searched, and a terminal-to-terminal communication network which is configured by the just before connection party is formed. Without requiring an operation by the user, therefore, a connection between terminals can be automatically established, and the communication can be continued.

Further, in the above configuration, in a case where the wireless identifier of the other wireless communication terminal which is found by the network searching unit does not coincide with the stored terminal identifier of the external communication terminal, the wireless control unit establishes terminal-to-terminal communication where the terminal identifier of the wireless communication terminal is set as a wireless identifier.

According to the configuration, among the plurality of wireless communication terminals which communicate with each other through the base-station communication network, the wireless communication terminal which first searches a wireless network cannot find a terminal-to-terminal communication network which matches the stored identifier of the external communication terminal and establishes a terminal-to-terminal communication network, and a wireless communication terminal which lately searches a wireless network is connected to the terminal-to-terminal communication network that is previously configured. Also even in the case where a plurality of terminals are substantially simultaneously moved outside the range of the base-station communication network, therefore, a connection between terminals can be automatically established without requiring an operation by the user, and the communication can be continued.

Further, in the above configuration, when the wireless control unit receives a connection request for terminal-to-terminal communication from the other wireless communication terminal, the identifier collating unit collates the stored terminal identifier of the external communication terminal with the terminal identifier of the other wireless communication terminal, and, in a case where the stored terminal identifier of the external communication terminal does not coincide with the terminal identifier of the other wireless communication terminal, the connection request is denied.

According to the configuration, when a request for a connection to the terminal-to-terminal communication network is received, a connection request from a wireless communication terminal, the identifier of which is not stored in the communication via the base-station communication network is denied, and only a known wireless communication terminal is allowed to be connected. Without requiring previous setting of authentication and encryption, therefore, safe communication can be performed.

Further, in the above configuration, the wireless communication terminal includes a server control unit which is adapted to control an operation state of a server function that, in response to a function request from the external communication terminal, transmits a response, and when the base-station communication disconnection detecting unit detects disconnection of the base-station communication, in a case where the server function is effective, the wireless control unit establishes terminal-to-terminal communication where the terminal identifier of the wireless communication terminal is set as a wireless identifier, and, in a case where the server function is ineffective, the wireless control unit searches terminal-to-terminal communication.

According to the configuration, in communication among a plurality of wireless communication terminals via the base-station communication network, one terminal functions as a server, the other terminals function as clients, and in the case where the plurality of terminals are moved outside the range of the base-station communication network, a terminal which constructs a terminal-to-terminal communication network is determined immediately and uniquely. Therefore, a reconnection in the terminal-to-terminal communication network can be performed more rapidly.

Further, in the above configuration, when receiving the function request from the other wireless communication terminal, the server control unit collates the stored terminal identifier of the external communication terminal with the terminal identifier of the other wireless communication terminal, and, in a case where the terminal identifier of the external communication terminal does not coincide with the terminal identifier of the other wireless communication terminal, the server control unit denies the function request.

According to the configuration, with respect to a function request for the server function, it is determined whether the request is allowed or not. With respect to an unknown wireless communication terminal, participation in the terminal-to-terminal communication network is allowed, and only a request for the server function can be denied. Namely, a more flexible access control can be performed.

A wireless communication method according to the present invention is a wireless communication method for a wireless communication terminal which performs base-station communication where the terminal communicates with a wireless base station, and terminal-to-terminal communication where the terminal communicates directly with another wireless communication terminal, the method comprising the steps of: storing a terminal identifier of an external communication terminal connected through the base-station communication; detecting disconnection of the base-station communication; searching another wireless communication terminal that performs the terminal-to-terminal communication; collating a wireless identifier of the other wireless communication terminal which is found in the step of searching the other wireless communication terminal, with the stored terminal identifier of the external communication terminal; and in a case where a result of the collation in the collating step shows identifier coincidence, connecting the wireless communication terminal to the other wireless communication terminal which is found.

According to the method, during communication via a base-station communication network, the identifier of the connection party terminal is previously stored, and when the communication link is disconnected, a neighbor wireless network is searched, and a terminal-to-terminal communication network which is configured by the just before connection party is formed. Without requiring an operation by the user, therefore, a connection between terminals can be automatically established, and the communication can be continued.

Further, in the above method, the method includes the step of, in a case where the wireless identifier of the other wireless communication terminal which is found does not coincide with the stored terminal identifier of the external communication terminal, establishing terminal-to-terminal communication where the terminal identifier of the wireless communication terminal is set as a wireless identifier.

According to the method, among the plurality of wireless communication terminals which communicate with each other via the base-station communication network, the wireless communication terminal which first searches a wireless network cannot find a terminal-to-terminal communication network which matches the stored identifier of the external communication terminal and configures a terminal-to-terminal communication network, and a wireless communication terminal which lately searches a wireless network is connected to the terminal-to-terminal communication network that is previously configured. Also even in the case where a plurality of terminals are substantially simultaneously moved outside the range of the base-station communication network, therefore, a connection between terminals can be automatically established without requiring an operation by the user, and the communication can be continued.

Further, in the above method, the method includes the steps of: receiving a connection request for terminal-to-terminal communication from the other wireless communication terminal; collating the stored terminal identifier of the external communication terminal with the terminal identifier of the other wireless communication terminal; and in a case where the stored terminal identifier of the external communication terminal does not coincide with the terminal identifier of the other wireless communication terminal, denying the connection request.

According to the method, when a request for a connection to the terminal-to-terminal communication network is received, a connection request from a wireless communication terminal, the identifier of which is not stored in the communication via the base-station communication network is denied, and only a known wireless communication terminal is allowed to be connected. Without requiring previous setting of authentication and encryption, therefore, safe communication can be performed.

Further, in the above method, the method includes the steps of: controlling an operation state of a server function that, in response to a function request from the external communication terminal, transmits a response; checking the operation state of the server function; in a case where the server function is effective, establishing terminal-to-terminal communication where the terminal identifier of the wireless communication terminal is set as a wireless identifier; and in a case where the server function is ineffective, searching terminal-to-terminal communication.

According to the method, in communication among a plurality of wireless communication terminals via the base-station communication network, one terminal functions as a server, the other terminals function as clients, and, in the case where the plurality of terminals are moved outside the range of the base-station communication network, a terminal which configures a terminal-to-terminal communication network is determined immediately and uniquely. Therefore, a reconnection in the terminal-to-terminal communication network can be performed more rapidly.

Further, in the above method, the method includes the steps of: receiving a function request from the other wireless communication terminal; collating the stored terminal identifier of the external communication terminal with the terminal identifier of the other wireless communication terminal; and in a case where the terminal identifier of the external communication terminal does not coincide with the terminal identifier of the other wireless communication terminal, denying the function request.

According to the method, with respect to a function request for the server function, it is determined whether the request is allowed or not. With respect to an unknown wireless communication terminal, participation in the terminal-to-terminal communication network is allowed, and only a request for the server function can be denied. Namely, a more flexible access control can be performed.

### Advantageous Effects of the Invention

According to the invention, even when moved outside the wireless area during communication, a reconnection in the ad-hoc mode (terminal-to-terminal communication) is performed without requiring an operation of previously registering identification information and key information, and the communication can be continued rapidly and safely.

### Brief Description of the Drawings

Fig. 1 shows an example of the configuration of a wireless communication system in which wireless communication terminals are used according to an embodiment of the invention.
Fig. 2 shows an example of the configuration of a wireless communication system in which the wireless communication terminals are used according to the embodiment of the invention.
Fig. 3 is a block diagram showing a schematic configuration of the wireless communication terminal according to the embodiment of the invention.
Fig. 4 is a flowchart illustrating a wireless reconnection procedure in the wireless communication terminals according to the embodiment of the invention.
Fig. 5 is a flowchart illustrating a wireless reconnection procedure in the wireless communication terminal having a server function according to the embodiment of the invention.
Fig. 6 is a flowchart illustrating a data transmission/reception procedure in the wireless reconnection procedure in the wireless communication terminals having a server function according to the embodiment of the invention.

### Description of Reference Numerals and Signs

- 11: communicating unit
- 12: terminal identifier storage
- 13: link disconnection detecting unit
- 14: wireless control unit
- 15: network searching unit
- 16: identifier collating unit
- 17: server control unit
- 100: wireless communication system
- 101, 102: wireless communication terminal
- 103: wireless access point
- 104, 107: wireless area
- 105, 106, 108: communication link
- 110: external terminal

### Best Mode for Carrying Out the Invention

Hereinafter, a preferred embodiment for executing the invention will be described in detail with reference to the drawings.

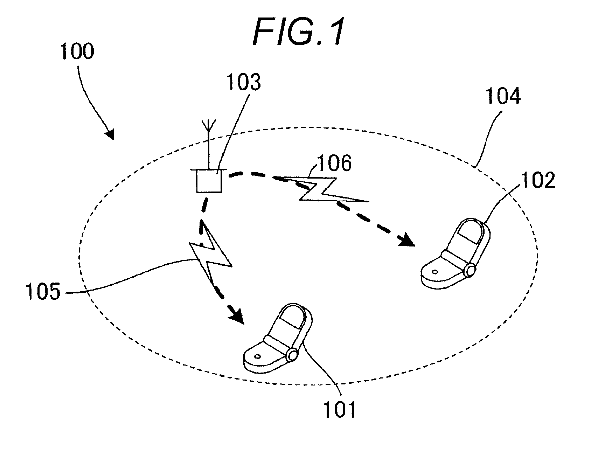

Fig. 1 shows an example of the configuration in which wireless communication terminals of an embodiment of the invention are connected to each other in the infrastructure mode (base-station communication) in a wireless communication system. Referring to the figure, the wireless communication terminals 101 and 102 of the embodiment are included in a wireless communication system 100. Also a wireless access point 103 is included in the wireless communication system 100. In the figure, for the sake of convenience of description, two wireless communication terminals are shown. Alternatively, the system may be configured by three or more wireless communication terminals.

The wireless communication terminals 101 and 102 include various functions such as a telephone function and a wireless communication function, for example, a portable telephone or a PDA. The wireless access point 103 is an access point for constructing a wireless LAN compliant with IEEE 802.11 or the like, and disposed in the home of the user of the wireless communication terminal 101, or in a public place. A wireless area 104 is an area which is administered and constructed by the wireless access point 103, and in which wireless communication can be performed. The wireless area 104 is an example of "wireless network". A network which is constructed by a wireless access point is called "infrastructure network". The wireless access point 103 periodically transmits a beacon signal. The wireless communication terminals 101 and 102 receive the beacon signal transmitted from the wireless access point 103, to know that they are located within the range of the wireless area 104.

Communication links 105 and 106 are logical communication paths which are established between the wireless communication terminals 101 and 102 and the wireless access point 103. The wireless communication terminal 103 in which the communication link with the wireless access point 103 is established can communicate with the wireless communication terminal 102 in which the communication link with the wireless access point 103 is similarly established. When the wireless communication terminals 101 and 102 are moved outside the range of the wireless area 104, the terminals detect that the beacon signal from the wireless access point 103 cannot be received, and disconnect the communication link with the wireless access point 103. On the basis of the detection, a connection in the ad-hoc mode (terminal-to-terminal communication) is tried.

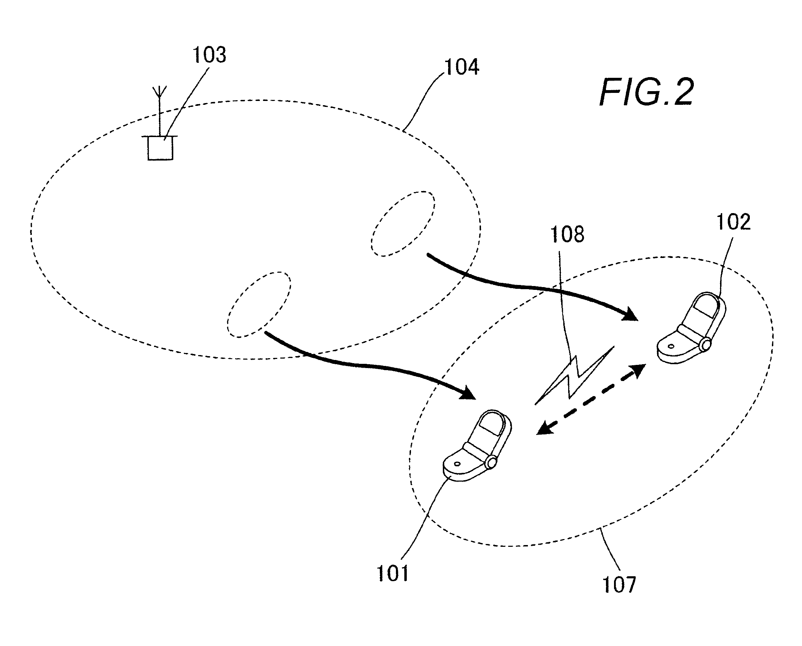

Fig. 2 shows an example of the configuration where the wireless communication terminals 101 and 102 are connected to each other in the ad-hoc mode in the wireless communication system 100. Referring to the figure, a wireless area 107 is a range which is constructed by the wireless communication terminals 101 and 102, and in which wireless communication can be performed. The wireless area 107 is an example of "wireless network". A network which is constructed by direct connection of wireless communication terminals is called "ad-hoc network". The wireless communication terminals 101 and 102 which constitute an ad-hoc network periodically transmit a beacon signal to cause neighbor wireless devices to detect the existence of the wireless area. A communication link 108 is a logical communication path which is established between the wireless communication terminals 101 and 102. The wireless communication terminals 101 and 102 in which the communication link 108 is established can communicate with each other.

### (Configuration of wireless communication terminal)

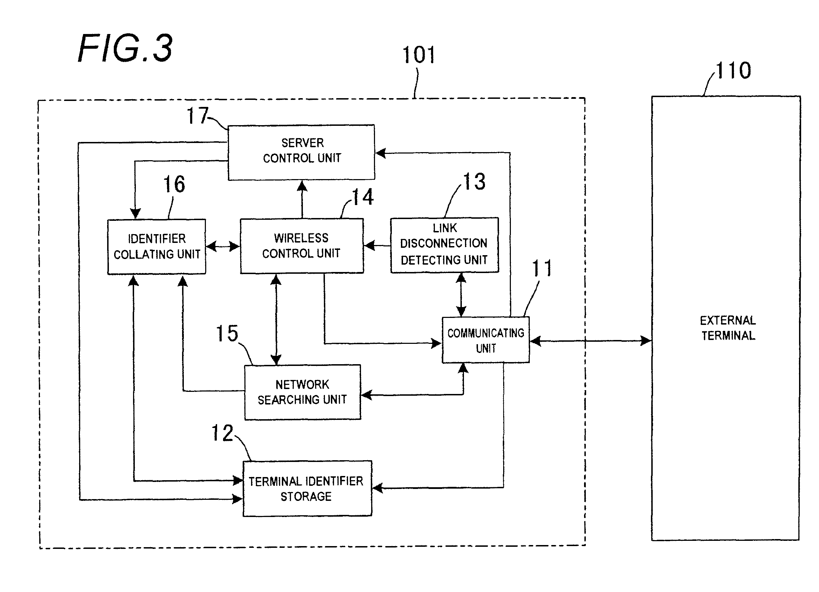

Fig. 3 is a block diagram showing a schematic configuration of the wireless communication terminal 101 of the embodiment. Referring to the figure, the wireless communication terminal 101 includes a communicating unit 11, a terminal identifier storage 12, a link disconnection detecting unit 13, a wireless control unit 14, a network searching unit 15, an identifier collating unit 16, and a server control unit 17.

For example, the communicating unit 11 is a wireless LAN device, and in accordance with instructions from the wireless control unit 14, establishes a connection with an external terminal 110 including the wireless access point 103 or the wireless communication terminal 102. Also, in accordance with instructions from the network searching unit 15, the communicating unit searches neighbor wireless networks, and outputs a result of the search. Furthermore, the communicating unit 11 receives a data frame from the external terminal 110, and supplies the terminal identifier of the transmission source of the data frame to the terminal identifier storage 12. When the communication link with the wireless access point 103 or the external terminal 110 is disconnected, furthermore, the communicating unit 11 notifies the link detecting unit 13 of it. Furthermore, the communicating unit 11 supplies request data which are received from the external terminal 110, to the server control unit 17.

The terminal identifier storage 12 stores the terminal identifier of the external terminal 110 which is supplied from the communicating unit 11. In response to an inquiry from the identifier collating unit 16 and the server control unit 17, furthermore, the terminal identifier storage 12 outputs stored terminal identifier information. The link disconnection detecting unit 13 monitors the link state in the communicating unit 11, and when detecting that the communication link is disconnected, notifies the wireless control unit 14 of the detection.

The wireless control unit 14 instructs the network searching unit 15 to search the wireless network, receives a result of the search, supplies the search result to the identifier collating unit 16, and causes the unit to collate the found wireless identifier of the wireless network with the terminal identifier stored in the terminal identifier storage 12. In the case where, from a result of the collation by the identifier collating unit 16, a wireless network of a wireless identifier which coincides with the stored terminal identifier is found, the wireless control unit 14 instructs the communicating unit 11 to be connected to the found wireless network. In the case where, from the result of the collation, a wireless network of a wireless identifier which coincides with the stored terminal identifier is not found, the wireless control unit 14 instructs the communicating unit 11 to set the terminal identifier of the terminal itself (the wireless communication terminal 101), as a wireless identifier in the ad-hoc mode, and to establish an ad-hoc network. When there is a connection request from the external terminal 110 to the communicating unit 11, the wireless control unit 14 obtains the terminal identifier of the connection request source, supplies the identifier to the identifier collating unit 16, and causes the unit to collate the terminal identifier of the connection request source with the terminal identifier stored in the terminal identifier storage 12. In the case of inconsistency as a result of the collation, the wireless control unit 14 supplies instructions to the communicating unit 11 so as to deny the connection from the external terminal 110.

When the link between the communicating unit 11 and the wireless access point 103 is disconnected by the link disconnection detecting unit 13, the network searching unit 15 searches a wireless network, and supplies a search result including the wireless identifier of a found wireless network, to the wireless control unit 14. The search of a wireless network is performed by causing the communicating unit 11 to transmit a probe request, and receiving a probe response and a beacon signal via the communicating unit 11. The identifier collating unit 16 collates the wireless identifier of the wireless network which is found by the network searching unit 15, with the terminal identifier which is stored in the terminal identifier storage 12, and supplies a result of the collation to the wireless control unit 14.

The server control unit 17 performs a control so that the operation state of the server function is switched to be effective or ineffective. In response to inquiry instructions from the wireless control unit 14, furthermore, the server control unit 17 outputs information indicating that the server function is effective or ineffective. When receiving a request for the server function from the communicating unit 11, the server control unit 17 causes the identifier collating unit 16 to check whether the terminal identifier of the request source terminal is stored in the terminal identifier storage 12 or not, and, if stored, transmits a response to the received request via the communicating unit 11. If, as a result of the collation, the terminal identifier of the request source terminal is not stored in the terminal identifier storage 12, the received request is denied.

### (Reconnection method in ad-hoc mode)

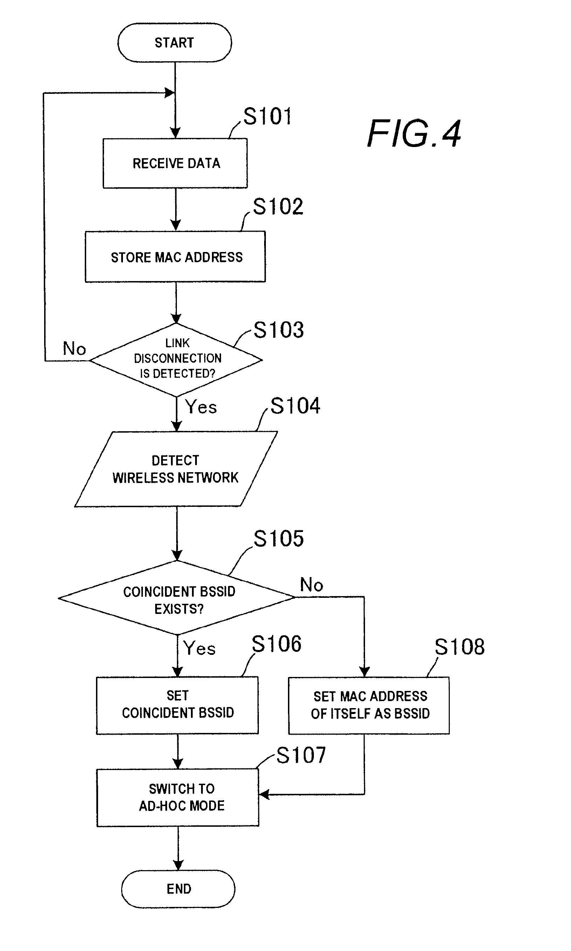

Next, an example of the operation of the wireless communication terminal 101 will be described, and also a reconnection method in the ad-hoc mode in the wireless communication terminal 101 will be described. Fig. 4 is a flowchart showing an example of the reconnection procedure in the ad-hoc mode in the wireless communication terminals 101 and 102. Here, the wireless communication terminal 101 is connected to the wireless communication terminal 102 in the infrastructure mode via the wireless access point 103, and in a state where mutual communication is enabled. As data of communication which is performed here, transfer of various data such as a voice packet for a telephone, control commands for a battle game, and multimedia data may be contemplated. However, the kind of communication data is not particularly restricted.

In the case where any data frame is received from the wireless communication terminal 102 (step S101), the communicating unit 11 stores the MAC (Media Access Control) address of the transmission source included in the header of the received data frame, into the terminal identifier storage 12 as the terminal identification information of the wireless communication terminal 102 (step S102). The data reception may be a response from the wireless communication terminal 102 in response to the request transmitted from the wireless communication terminal 101, or a request from the wireless communication terminal 102. In the case where the reception is the second or subsequent reception of a data frame from the wireless communication terminal 102, the MAC address of the wireless communication terminal 102 is already registered in the terminal identifier storage 12, and hence the registration is not required to be again performed.

During a period when the communication link in the communicating unit 11 is established, the link disconnection detecting unit 13 always monitors the state (the loop in which, if No in step S103, the control returns to step S101). If the wireless communication terminal 101 is moved outside the range of the wireless area 104 of the wireless access point 103 and the communication link is disconnected (if the determination in step S103 is Yes), the link disconnection detecting unit 13 notifies the wireless control unit 14 of the link disconnection, and the wireless control unit 14 instructs the network searching unit 15 to search a wireless network (step S104). The network searching unit 15 instructs the communicating unit 11 to transmit a probe request, and when a response from the communicating unit 11 is input, obtains a search result.

When instructed by the network searching unit 15 to transmit a probe request, the communicating unit 11 transmits a probe request. At this time, in the case where a wireless communication terminal does not exist in the neighborhood, the probe request is not received. In the case where the wireless communication terminal 102 in the ad-hoc mode exists, the wireless communication terminal 102 receives the probe request transmitted by the communicating unit 11, and the wireless communication terminal 102 transmits a probe response. The probe response is received by the communicating unit 11 of the wireless communication terminal 101. The probe response contains a BSSID (Basic Service Set Identifier) as the wireless identifier of the wireless network.

When the network searching unit 15 supplies the search result to the wireless control unit 14, the wireless control unit 14 requests the identifier collating unit 16 to determine whether the BSSID of the searched wireless network coincides with one of MAC addresses stored in the terminal identifier storage 12 or not (step S105). If the identifier collating unit 16 determines that a coincident MAC address exists (if Yes in step S105), the wireless control unit 14 sets the coincident MAC address as the BSSID in the ad-hoc mode (step S106), and instructs the communicating unit 11 to be switched to the ad-hoc mode (step S107).

By contrast, if the identifier collating unit 16 determines that a coincident MAC address does not exist (if No in step S105), the wireless control unit 14 sets the MAC address of the terminal itself (the wireless communication terminal 101), as the BSSID in the ad-hoc mode (step S108), and instructs the communicating unit 11 to be switched to the ad-hoc mode (step S107). When switched to the ad-hoc mode, the wireless control unit receives the beacon signal transmitted from the external terminal 110 (the wireless communication terminal 102), while periodically transmitting the beacon signal containing the BSSID. At this time, when a beacon signal containing the BSSID which is identical with that of the terminal itself, the connection with the external terminal 110 in the ad-hoc mode is established. In the case where, in the state where the mode is switched to the ad-hoc mode, a probe request is not received for a predetermined time period, preferably, it is determined that a wireless communication terminal to be connected does not exist, and the connection waiting state is cancelled.

As a result of the above operation procedure, in the case where the wireless communication terminal 101 is moved outside the range and the wireless communication terminal 102 is subsequently moved outside the range, the wireless communication terminal 101 does not find the connection destination network, and therefore is switched to the ad-hoc mode in which the MAC address of the terminal itself (the wireless communication terminal 101) is set as the BSSID. Then, the wireless communication terminal 102 finds the ad-hoc network constructed by the wireless communication terminal 101, and is switched to the ad-hoc mode in which the MAC address of the wireless communication terminal 101 is set as the BSSID, so that the communication link with the wireless communication terminal 101 can be established. Even when moved outside the range of the wireless area, namely, a connection can be automatically established between the wireless communication terminals 101 and 102. Also in the case where the wireless communication terminal 101 is moved outside the range after the wireless communication terminal 102 is moved outside the range, the wireless communication terminal 101 can be connected to the ad-hoc network in which the MAC address of the wireless communication terminal 102 is set as the BSSID, by a similar procedure.

### (Reconnection method in case of having server function)

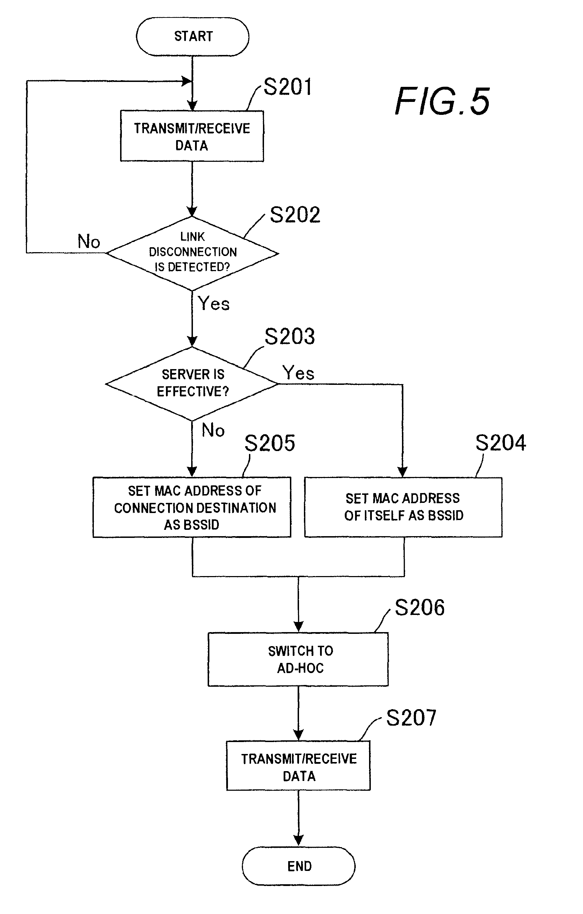

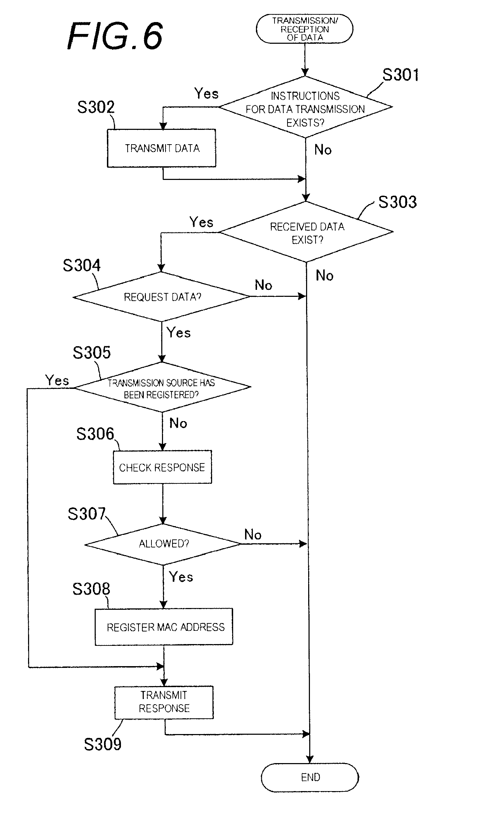

Next, an example of the reconnecting operation in the ad-hoc mode in the case where the wireless communication terminal 101 has the server function will be described with reference to Figs. 5 and 6. As an example of a wireless communication terminal having the server function, a UPnP (Universal Plug and Play) media server is known. A UPnP media server has a function of storing various multimedia contents and providing them to clients. More specifically, a UPnP media server receives a browse request from a client via a network, and transmits list information of the stored contents as a response, to the client. Also, a UPnP media server receives a media data acquisition request from a client, and transmits the stored media contents as a response.

Hereinafter, it is assumed that the wireless communication terminal 101 of the embodiment has a UPnP media server function and a client function by which the terminal can be connected to a UPnP media server, and the UPnP media server function can be arbitrarily switched by the user to be effective or ineffective. The UPnP media server function and the client function may simultaneously operate or may exclusively operate.

Fig. 5 is a flowchart illustrating an example of a reconnection procedure which is performed in the ad-hoc mode in the wireless communication terminal 101 having the UPnP media server function and the client function. Referring to the figure, the wireless communication terminal 101 is connected to the wireless communication terminal 102 in the infrastructure mode via the wireless access point 103, and in a state where mutual communication is enabled. Here, the above-described browse request, a response to the request, and content data are transmitted and received (step S201).

A detailed example of the operation of the data transmission/reception (step S201) in Fig. 5 will be described with reference to Fig. 6. Referring to the figure, the communicating unit 11 determines whether data to be transmitted exist or not, and, if such data exist (if Yes in step S301), the communicating unit transmits the data to the wireless communication terminal 102 (step S302). For example, the data to be transmitted are various requests the transmission of which is instructed by the client function, various replies the transmission of which is instructed by the server function, and the like.

By contrast, if instructions for data transmission do not exist in the communicating unit 11 (if No in step S301), it is then checked whether received data exist or not (step S303). For example, the received data are various request data which are received from the external terminal 110 including the wireless communication terminal 102, response data in response to a request transmitted from the wireless communication terminal 101, and the like. If received data do not exist in the communicating unit 11 (if No in step S303), the data transmitting/receiving flow is once ended.

If received data exist in the communicating unit 11 (if Yes in step S303), it is then checked whether the received data are request data received from the external terminal 110 or not (step S304). If the received data are not request data from the external terminal 110 (if No in step S304), the data transmitting/receiving flow is once ended. Although illustration is omitted, when the data which are received here are a response in response to a request transmitted by the client function, the data are processed by the client function.

By contrast, if the received data are request data from the external terminal 110 (if Yes in step S304), the communicating unit 11 supplies the received data to the server control unit 17, and the server control unit 17 requests the identifier collating unit 16 to perform collation for checking whether the MAC address of the transmission source of the request data coincides with that stored in the terminal identifier storage 12 (step S305). If the MAC address of the transmission source of the request data has been registered (if Yes in step S305), the server control unit 17 instructs the communicating unit 11 to transmit response data in response to the request data, the communicating unit 11 transmits the response data to the external terminal 110 (step S309), and the data transmitting/receiving flow is once ended.

By contrast, if the MAC address of the transmission source of the request data has not been registered (if No in step S305), the server control unit 17 checks whether the request is to be accepted or not (step S306). This check procedure may be performed in various manners. For example, a message promoting the checking is displayed on a displaying device (not shown), and denial or allowance may be determined depending on a result of an inputting operation which is performed by the user of the wireless communication terminal 101 on an operation inputting device (not shown). If the server control unit 17 denies the request (if No in step S307), response data are not transmitted, and the data transmitting/receiving flow is once ended.

By contrast, if the server control unit 17 allows the request (if Yes in step S307), the server control unit 17 registers the MAC address of the external terminal 110 the request of which is allowed, into the terminal identifier storage 12 (step S308), and instructs the communicating unit 11 to transmit response data in response to the request data. The communicating unit 11 transmits the response data to the external terminal 110 (step S309), and the data transmitting/receiving flow is once ended.

Returning to Fig. 5, during a period when the communication link in the communicating unit 11 is established, the link disconnection detecting unit 13 always monitors the state (if No in step S202). If the link disconnection is not detected, the data transmitting/receiving flow which has been described with reference to Fig. 6 is again performed.

If the wireless communication terminal 101 is moved outside the range of the wireless area 104 of the wireless access point 103, and the communication link is disconnected (if Yes in step S202), the link disconnection detecting unit 13 notifies the wireless control unit 14 of the link disconnection. When notified of the link disconnection, the wireless control unit 14 inquires the server control unit 17 about the operation state of the server, and if the sever is set to be effective (if Yes in step S203), sets the MAC address of the terminal itself (the wireless communication terminal 101), as the BSSID of a network which participates in the ad-hoc mode (step S204), and instructs the communicating unit 11 to be switched to the ad-hoc mode.

By contrast, if, as a result of the inquiry to the server control unit 17 about the operation state of the server, the server is set to be ineffective (if No in step S203), the wireless control unit 14 fetches the MAC address of the UPnP media server of the connection destination from a terminal identifier B, sets the address of the connection destination as the BSSID of the network which participates in the ad-hoc mode (step S205), and instructs the communicating unit 11 to be switched to the ad-hoc mode.

The communicating unit 11 which is instructed to be switched to the ad-hoc mode switches the mode to the ad-hoc mode (step S206). At this time, in the case where an external terminal 110 in which the same BSSID is set, and which is in the ad-hoc mode exists in the neighborhood, the connection with the external terminal 110 is established, and a state where communication is enabled is set. More specifically, the communicating unit 11 in the ad-hoc mode periodically transmits the beacon signal, and at the same time performs an operation of monitoring the beacon signal transmitted from the external terminal 110. The beacon signal contains BSSID information for identifying the network. Namely, the beacon signal transmitted from the communicating unit 11 contains the BSSID information which is set in the above.

When receiving the beacon signal from the external terminal 110, the BSSID of the beacon signal is checked, and, in the case where it coincides with the BSSID which is set in the communicating unit 11, the probe request is transmitted to the external terminal 110 which is the transmission source of the beacon signal. As a result, a state where a connection is established between the wireless communication terminal 101 and the external terminal 110 is set. The wireless communication terminal 101 in which the connection with the external terminal 110 is established transmits and receives data to and from the external terminal 110 (step S207). The procedure of the operation of transmitting/receiving data is identical with the operation procedure which has been described with reference to Fig. 6.

As a result of the above operation procedure, in the case where the wireless communication terminal 101 in which the server function is effective, and the wireless communication terminal 102 in which the server function is ineffective are moved outside the range of the infrastructure network 104, the wireless communication terminal 101 is switched to the ad-hoc mode in which the MAC address of the wireless communication terminal 101 is set as the BSSID, and also the wireless communication terminal 102 is switched to the ad-hoc mode in which the MAC address of the wireless communication terminal 101 is set as the BSSID. Between the wireless communication terminal 101 and the wireless communication terminal 102, therefore, a connection in the ad-hoc mode can be established more rapidly, and the communication can be continued.

Even in the case where, during communication in the infrastructure mode, the external terminal 110 in which a connection is not allowed by the wireless communication terminal 101 (the MAC address is not registered) participates in an ad-hoc mode network, the wireless communication terminal 101 denies the request from the external terminal 110. Therefore, communication in which an authentication procedure is not required, and which is safe can be performed.

In the embodiment, the operations of two wireless communication terminals, i.e., a wireless communication terminal which operates as a server, and a wireless communication terminal which operates as a client have been described. Even in the case where there are a plurality of terminals which have a client function, these terminals participate in an ad-hoc network in which the MAC address of the wireless communication terminal that operates as a server is set as the BSSID, and, in a similar manner as the case of two terminals, the communication in the ad-hoc mode therefore can be continued.

In the case where, in the state where the mode is switched to the ad-hoc mode, a probe request is not received for a predetermined time period, preferably, it is determined that a wireless communication terminal to be connected does not exist, and the connection waiting state is cancelled. When the power supply of a wireless device is turned OFF, furthermore, an effect of reducing wasted power consumption is attained.

Although the embodiment has been described in connection with the example in which the server function is a UPnP media server, the server function is not restricted to this as far as dependency among a plurality of terminals is clear. A file server and a client, called and calling parties of a telephone call, inviting and invited parties of game start in a network battle game, or the like may be used.

The embodiment has been described in connection with the example in which the determination is conducted depending on that coincidence is attained or not in the procedure of collating the registered MAC address with the BSSID that is obtained as a result of the network search. Alternatively, the determination may be conducted depending on that coincidence is attained or not between an identifier which is calculated from the MAC address by an arbitrary calculation such as the hash function, and the BSSID. In the alternative, it is difficult to estimate the MAC address from the BSSID, and effects that an unintended external terminal is prevented from participating in the ad-hoc network, and that impersonation of a wireless terminal is prevented from occurring.

Although the invention has been described in detail and with reference to the specific embodiment, it is obvious to those skilled in the art that various changes and modifications can be made without departing from the spirit and scope of the invention.

The application is based on Japanese Patent Application (No. 2008-9171) filed on January 18, 2008, and its contents are incorporated herein by reference.

### Industrial Applicability

The invention has an effect that, even when moved outside the wireless area during communication, a reconnection in the ad-hoc mode is performed without requiring an operation of previously registering identification information and key information, and the communication can be continued rapidly and safely. The invention is useful in a portable terminal or the like having a wireless communication function, such as a portable telephone terminal, a personal computer, a PDA, or a portable game machine.

## Claims

1. A wireless communication terminal which performs base-station communication where the terminal communicates with a wireless base station, and terminal-to-terminal communication where the terminal communicates directly with another wireless communication terminal, the wireless communication terminal comprising:
a terminal identifier storage for storing a terminal identifier of an external communication terminal connected through the base-station communication;
a base-station communication disconnection detecting unit which is adapted to detect disconnection of the base-station communication;
a network searching unit which is adapted to search another wireless communication terminal that performs the terminal-to-terminal communication;
an identifier collating unit which is adapted to collate a wireless identifier of the other wireless communication terminal which is found by the network searching unit, with the stored terminal identifier of the external communication terminal; and
a wireless control unit which is, in a case where a result of the collation by the identifier collating unit coincides, adapted to connect the wireless communication terminal to the other wireless communication terminal which is found by the network searching unit.

2. The wireless communication terminal according to claim 1, wherein, in a case where the wireless identifier of the other wireless communication terminal which is found by the network searching unit does not coincide with the stored terminal identifier of the external communication terminal, the wireless control unit establishes terminal-to-terminal communication where the terminal identifier of the wireless communication terminal is set as a wireless identifier.

3. The wireless communication terminal according to claim 2, wherein, when the wireless control unit receives a connection request for terminal-to-terminal communication from the other wireless communication terminal, the identifier collating unit collates the stored terminal identifier of the external communication terminal with the terminal identifier of the other wireless communication terminal, and, in a case where the stored terminal identifier of the external communication terminal does not coincide with the terminal identifier of the other wireless communication terminal, the connection request is denied.

4. The wireless communication terminal according to any one of claims 1 to 3, wherein the wireless communication terminal includes a server control unit which is adapted to control an operation state of a server function that, in response to a function request from the external communication terminal, transmits a response, and
when the base-station communication disconnection detecting unit detects disconnection of the base-station communication, in a case where the server function is effective, the wireless control unit establishes terminal-to-terminal communication where the terminal identifier of the wireless communication terminal is set as a wireless identifier, and, in a case where the server function is ineffective, the wireless control unit searches terminal-to-terminal communication.

5. The wireless communication terminal according to claim 4, wherein, when receiving the function request from the other wireless communication terminal, the server control unit collates the stored terminal identifier of the external communication terminal with the terminal identifier of the other wireless communication terminal, and, in a case where the terminal identifier of the external communication terminal does not coincide with the terminal identifier of the other wireless communication terminal, the server control unit denies the function request.

6. A wireless communication method for a wireless communication terminal which performs base-station communication where the terminal communicates with a wireless base station, and terminal-to-terminal communication where the terminal communicates directly with another wireless communication terminal, the method comprising the steps of:
storing a terminal identifier of an external communication terminal connected through the base-station communication;
detecting disconnection of the base-station communication;
searching another wireless communication terminal that performs the terminal-to-terminal communication;
collating a wireless identifier of the other wireless communication terminal which is found in the step of searching the other wireless communication terminal, with the stored terminal identifier of the external communication terminal; and
in a case where a result of the collation in the collating step shows identifier coincidence, connecting the wireless communication terminal to the other wireless communication terminal which is found.

7. The wireless communication method according to claim 6, wherein the method includes the step of, in a case where the wireless identifier of the other wireless communication terminal which is found does not coincide with the stored terminal identifier of the external communication terminal, establishing terminal-to-terminal communication where the terminal identifier of the wireless communication terminal is set as a wireless identifier.

8. The wireless communication method according to claim 7, wherein the method includes the steps of
receiving a connection request for terminal-to-terminal communication from the other wireless communication terminal;
collating the stored terminal identifier of the external communication terminal with the terminal identifier of the other wireless communication terminal; and
in a case where the stored terminal identifier of the external communication terminal does not coincide with the terminal identifier of the other wireless communication terminal, denying the connection request.

9. The wireless communication method according to any one of claims 6 to 8, wherein the method includes the steps of
controlling an operation state of a server function that, in response to a function request from the external communication terminal, transmits a response;
checking the operation state of the server function;
in a case where the server function is effective, establishing terminal-to-terminal communication where the terminal identifier of the wireless communication terminal is set as a wireless identifier; and
in a case where the server function is ineffective, searching terminal-to-terminal communication.

10. The wireless communication method according to claim 9, wherein the method includes the steps of:
receiving a function request from the other wireless communication terminal;
collating the stored terminal identifier of the external communication terminal with the terminal identifier of the other wireless communication terminal; and
in a case where the terminal identifier of the external communication terminal does not coincide with the terminal identifier of the other wireless communication terminal, denying the function request.
